Europäisches Patentamt

European Patent Office

Office européen des brevets

(11) Veröffentlichungsnummer: **0 162 429**
**B1**

# (12) EUROPÄISCHE PATENTSCHRIFT

(45) Veröffentlichungstag der Patentschrifft:
07.02.90

(21) Anmeldenummer: 85106138.2

(22) Anmeldetag: 18.05.85

(51) Int. Cl.⁵: C 04 B 41/85

(54) Verfahren zum dauerhaften, farbigen Kennzeichnen von Vorder-, und/oder Rückseiten von Bauteilen aus Sinterkeramik.

(30) Priorität: 22.05.84 DE 3418987

(43) Veröffentlichungstag der Anmeldung:
27.11.85 Patentblatt 85/48

(45) Bekanntmachung des Hinweises auf die Patenterteilung:
07.02.90 Patentblatt 90/06

(84) Bennante Vertragsstaaten:
AT BE CH DE FR GB IT LI LU NL SE

(56) Entgegenhaltungen:
DE-B-1 272 207

Salmang, Scholze "Keramik", Teil 2, Springer Verlag
1983, S. 172,252

Singer "Industrial Ceramics", 1979, pages 644, 645,
797, 798

(73) Patentinhaber: Feldmühle Aktiengesellschaft
Fritz-Vomfelde-Platz 4
D-4000 Düsseldorf 11 (DE)

(72) Erfinder: Wloka, Gert
Jahnstrasse 59
D-7302 Ostfildern 3 (DE)
Erfinder: Koser, Gerhard
Alte Holzhäuserstrasse 11
D-7336 Uhingen (DE)
Erfinder: Uhrner, Klaus-Jürgen, Dipl.-Ing (FH)
Nordheimerstrasse 11a
D-7105 Leingarten 1 (DE)

## Beschreibung

Die Erfindung betrifft ein Verfahren zum dauerhaften, farbigen Kennzeichnen von Rückseiten von Bauteilen aus Sinterkeramik, insbesondere Bauteilen aus gesinterter Oxidkeramik, die nach dem Sintervorgang einer weiteren Bearbeitung durch Schleifen, Läppen und ggf. Polieren der Vorderseite und Schleifen der Rückseite unterzogen werden, wobei diese Bauteile aus keramischen Pulvern zu weitgehend dichten Grünlingen gepreßt oder unter Zusatz von Plastifikatoren extrudiert und die Grünlinge ggf. vor dem Sinterprozeß nachgearbeitet werden.

Unter Sinterkeramik im Sinne der vorliegenden Anmeldung sollen gesinterte Hartstoffe, wie Karbide, Boride und Nitride, insbesondere jedoch gesinterte Oxide, speziell von Aluminium und Zirkon verstanden werden, wobei diese Stoffe sehr rein, aber in Mischung miteinander vorliegen können. Selbstverständlich enthalten sie auch noch Sinterhilfsmittel, wie beispielsweise Magnesiumoxid als Kornwachstumshemmer oder Stoffe zur Reduzierung der Sintertemperatur, wie Siliziumoxid.

Hartstoffe der vorgenannten Art müssen für die meisten Anwendungsfälle, insbesondere, wenn sie im gleitenden Eingriff mit weiteren Bauteilen stehen, nach dem Sintervorgang geschliffen, ggf. geläppt und poliert werden. Aufgrund der hohen Härte dieser Materialien lassen sich die Bearbeitungsvorgänge nur mit Diamantwerkzeugen durchführen, d. h. die Bearbeitung ist ausgesprochen kostenaufwendig hinsichtlich des eingesetzten Materials, sie ist aber auch kostenaufwendig in Bezug auf die Arbeitszeiten, da Hartstoffe, wie Oxidkeramik der Bearbeitung aufgrund ihrer eigenen Härte einen erheblichen Widerstand entgegensetzen. Man ist daher bemüht, die Nachbearbeitung von Hartstoffen möglichst auf ein Minimum zu reduzieren und nur die Flächen zu bearbeiten, die unbedingt bearbeitet werden müssen.

Bei einer Vielzahl von Bauteilen unterscheiden sich Vorder- und Rückseite nur unwesentlich voneinander, so daß sehr häufig Verwechslungen vorkommen, d. h. die Seite bearbeitet wird, die als Rückseite eine solche Bearbeitung nicht erfordert, wohingegen die Vorderseite unbearbeitet bleibt, was entweder zu Ausschuss oder zu einem erneuten Bearbeiten der Vorderseite und damit zu weiteren Kosten führt. Beispiele für solche Bauteile sind Dichtscheiben in Wasserarmaturen, aber auch Gleitringdichtungen für Pumpen aller Art. Die Erfindung soll daher am Beispiel von Gleitringdichtungen für Pumpen abgehandelt werden, ohne sie jedoch darauf zu beschränken.

Bei Gleitringdichtungen für Pumpen werden Gegenringe aus gesinterten Hartstoffen eingesetzt, deren eine Seite, die Dichtungsseite, mit einem Gleitpartner, wie Kohle, Hartkohle, Keramik, Phenolharz, Chromguß usw. im Eingriff steht. Diese Dichtungsseite muß bearbeitet sein, d. h. geschliffen, geläppt und ggf. poliert. Wird die Dichtungsseite versehentlich nicht bearbeitet, oder irrtümlich falsch eingebaut, so daß die unbearbeitete Seite mit dem Gleitpartner, also beispielsweise einem Hartkohlering in Eingriff kommt, so fällt die Dichtung nach wenigen Umdrehungen durch Undichtheit aus. Es ist daher von sehr hoher Bedeutung, daß die Seite, die bei der Herstellung poliert werden soll, als solche eindeutig gekennzeichnet ist, ebenso muß für die Montage einer Gleitringdichtung diese Seite eindeutig erkennbar sein.

Der Stand der Technik sah bisher dafür vor, in die Dichtscheiben auf der nicht polierten Seite unterschiedliche Konturen einzubringen, wobei, da diese Konturen aus technischen Gründen nur geringfügige Tiefen aufweisen konnten, an die Beobachtungsgabe des Arbeiters an der Schleif-, Läpp- oder Poliermaschine ebenso hohe Anforderungen gestellt wurden, wie an den Monteur, der die Dichtscheibe anschließend zu einer Wellendichtung zusammenfügte.

Das Auf- oder Einbringen von Vertiefungen, Nuten oder Nocken in die Gleitringe erfordert zudem einen zusätzlichen Aufwand bei der Herstellung der Preßwerkzeuge. Die Markierungen sind außerdem durch späteres Bearbeiten oft weitgehend unkenntlich.

Eine farbliche Kennzeichnung durch Bedrucken erwies sich insbesondere auf oxidkeramischen Materialien als sehr wenig haltbar, außerdem war dieser Arbeitsgang erst bei der Endkontrolle möglich, da die Teile vorher nochmals gewaschen werden. Die Verwechslungsgefahr während des Fertigungsprozesses blieb deshalb erhalten. Aufgrund der oft sehr kleinen zur Verfügung stehenden Dimensionen war sie auch nicht so auffällig, daß im Fertigungsprozeß Verwechslungen der beiden Seiten ausgeschlossen werden konnten. Die Hersteller von Gleitringen gingen daher meist dazu über, beide Seiten vollständig zu bearbeiten, was zu erhöhten Bearbeitungskosten führte.

Aus Singer "Industrial Ceramics" ist der Einsatz von Massefärbungen aus technischen Gründen bekannt. Massefärbungen führen aber zu einer kompletten Durchfärbung des Werkstückes, ermöglichen damit keine unterschiedliche Einfärbung der Vor- und Rückseiten. Eine weitere mögliche Methode zum Einfärben des Scherbens durch Aufbringen von färbende Bestandteile enthaltenden Lösungen auf den porösen Körper vor dem Dichtbrand ist bei der Herstellung von Sinterkeramik für technische Zwecke nicht zu verwirklichen, da nicht mit einem Vorbrand gearbeitet wird, durch den ein poröser Körper erzeugt werden kann. Desweiteren saugt der poröse Körper die Lösungen auf, was zu einer Durchtränkung und damit auch zu einer Einfärbung der Vorderseite führt.

Der vorliegenden Anmeldung liegt damit die Aufgabe zugrunde, ein Verfahren aufzuzeigen, das eine dauerhafte, farbige Kennzeichnung der Rückseiten ermöglicht, d. h. die Rückseite im wesentlichen vollflächig einzufärben, so daß durch den unterschiedlichen Farbton sowohl bei der Bearbeitung als auch beim Einsatz eindeutig die Unterscheidung zwischen Vorder- und Rückseite möglich ist.

Diese Aufgabe wird gelöst durch ein Verfahren zum dauerhaften farbigen Kennzeichnen der Rückseiten von Bauteilen aus Sinterkeramik, insbesondere Bauteilen aus gesinterter Oxidkeramik, die nach dem Sintervorgang einer weiteren Bearbeitung durch Schleifen, Läppen und ggf. Polieren der Vorderseite und Schleifen der Rückseite unterzogen werden, wobei diese Bauteile aus keramischen Pulvern zu weitgehend dichten Grünlingen gepreßt oder unter Zusatz von Plastifikatoren extrudiert und die Grünlinge ggf. vor dem Sinterprozeß nachgearbeitet werden, mit dem kennzeichnenden Merkmal, daß die Grünlinge vor dem Sinterprozeß an der Rückseite mit ein oder mehreren beim Sinterprozeß sich mit dem keramischen Pulver verbindenden färbenden Substanz versehen werden.

Sinterkeramik besteht im wesentlichen aus den gesinterten Bestandteilen eines Stoffes, Aluminiumoxidkeramik besteht also zum überwiegenden Teil aus Aluminiumoxid, wobei der Aluminiumoxidgehalt der Massen, sobald er 85 % übersteigt, für technische Zwecke interessante, verwertbare Eigenschaften aufweist. Unter Oxidkeramik im allgemeinen versteht man daher Stoffe, die eine Reinheit von über 85 % besitzen. Unter hoch reinen Oxidkeramiken solche, die eine Reinheit von über 97 % besitzen. Durch diese Reinheit werden im wesentlichen – einen entsprechenden Sinterprozeß vorausgesetzt – die physikalischen Eigenschaften des einzelnen Bauteils festgelegt. Verunreinigungen oder gezielte Zusätze verändern diese Eigenschaften. Bei den als Beispiel zugrundegelegten Dichtringen für Gleitringdichtungen ist neben der chemischen Beständigkeit der Oxidkeramik ihre Verschleißfestigkeit von entscheidender Bedeutung, um durch möglichst wenig Abrieb eine lange Lebensdauer zu erreichen. Diese Verschleißfestigkeit ist wiederum außer vom eingesetzten Material von der Reinheit des Materials abhängig. Im Beispiel des Aluminiumoxids, das wegen seiner chemischen Beständigkeit hervorragend für Gleitringdichtungen geeignet ist, werden Gleitringe, die extremen Beanspruchungen standhalten sollen, daher aus hochreiner Oxidkeramik gefertigt, wobei der Reinheitsgehalt weit über 99 % liegen kann.

Bei dieser Anforderung an die Reinheit verbietet sich von selbst eine Zumischung von färbenden Substanzen, weil dadurch die Festigkeitseigenschaften und insbesondere die Härte reduziert werden. Die Härte wird jedoch nur im Bereich der Vorderseite, also der Dichtseite einer Dichtscheibe gefordert. Damit ist es durchaus möglich, die Rückseite mit färbenden Substanzen zu versehen, sofern sichergestellt ist, daß diese nicht durch die Scheibe hindurch auf die Vorderseite durchdiffundieren.

Gemäß einer bevorzugten Ausgestaltung der Erfindung werden deshalb die Rückseiten der Grünlinge angefeuchtet und mit einer färbenden Substanz bestäubt. Es ergibt sich dabei ein Überzug, der nur 0,3 bis 1,0 mm in das fertig gesinterte Bauteil eingedrungen ist, insbesondere dann, wenn gemäß einer vorteilhaften Ausgestaltung der Erfindung das Bestäuben der Grünlinge mit Oxiden der Metalle der IV bis VIII Nebengruppe des periodischen Systems der Elemente erfolgt.

Die sich durch den Sintervorgang einstellende Färbung ist abhängig von den verwandten Oxiden. So führt die Verwendung von Nickeloxid zu einem hellen Grün, Kupferoxid zu einem Braun, Kobaltoxid zu Blau und Eisenoxid ($Fe_2O_3$) zu einem gelbbraunen Farbton. Dieser Farbton nimmt bei Verwendung von $Al_2O_3$ als Bauteilmaterial mit zunehmender Eindringtiefe in das Bauteil ab, d. h. er wird im heller, da Aluminiumoxid als solches einen weißen Farbton aufweist. Die aufzubringenden Mengen der Oxide sind relativ gering, sie liegen gemäß einer bevorzugten Ausgestaltung der Erfindung zwischen 20 und 500 g/qm, bezogen auf die einzufärbende Fläche des Grünlings. Die Farbgebung erfolgt durch Verbindung der Oxide mit dem oxidkeramischen Werkstoff, also im vorliegenden Beispiel mit dem Aluminiumoxid, wobei bereits Zusätze, die mit dem Aluminiumoxid eine Mischung von 0,01 % ergeben, bei der Verwendung von Nickeloxid, Kobaltoxid, Chromoxid und Eisenoxid zu deutlich wahrnehmbaren Einfärbungen führen. Kupferoxid und Manganoxid erfordern eine geringfügig höhere Dosierung. Hier ergibt sich bei einem Prozentsatz von 0,05 % eine brauchbare Einfärbung.

In den Fällen, in denen beim Bauteil eine Planparallelität der Oberflächen, also von Vorder- und Rückfläche verlangt wird, ist eine Bearbeitung beider Seiten erforderlich, wobei jedoch nur eine Seite, nämlich bei Dichtscheiben die Dichtseite, im Anschluß daran noch geläppt und poliert werden muß. Durch den Schleifvorgang, der sich an den Sintervorgang anschließt, wird also eingefärbtes Material von der Rückseite abgetragen, wobei es in ungünstigen Fällen dazu kommen kann, daß die relativ dünne farbgebende Schicht völlig entfernt wird.

Eine besonders bevorzugte Ausgestaltung der Erfindung sieht deshalb vor, daß auf die Rückseite der Grünlinge eine eine färbende Substanz enthaltende Lösung aufgebracht wird, wobei diese Lösung zweckmäßig aufgesprüht wird. Die Lösung, die gemäß einer bevorzugten Ausgestaltung der Erfindung eine Salzlösung von Salzen der Metalle der IV bis VIII Nebengruppe des periodischen Systems der Elemente ist, diffundiert leichter in den Grünling ein, wobei die Eindringtiefe durch die aufgebrachte Menge der Lösung und die Konzentration der Lösung gesteuert werden kann. Eine vorteilhafte Ausgestaltung der Erfindung sieht vor, daß 20 bis 500 ml Lösung pro qm auf die Oberfläche der Grünlingrückseite aufgebracht werden, wobei die Salzlösung eine Konzentration von 5 bis 80 % aufweist.

Bei der Verwendung von Salzlösungen können Eindringtiefen erreicht werden, die wesentlich weiter gehen als das durch das Eindiffundieren von Oxiden möglich ist. Es ist damit also auch möglich, eine eingefärbte Fläche mehrfach zu schleifen und trotzdem noch einen gut sichtbaren Farbton zu erhalten. Die Eindringtiefe kann dabei 2 mm betragen.

Die Erfindung wird nachstehend anhand von Beispielen näher erläutert.

**Beispiel 1**

In eine Form mit einem Außendurchmesser von 34 mm und einem Innendruchmesser von 21,5 mm werden 7,4 g Aluminiumoxid in einer Reinheit von 97,5 % $Al_2O_3$-Gehalt und Beimengungen von MgO, $SiO_2$, CaO eingefüllt und unter einem Druck von 1 200 da N/cm$^2$ verdichtet. Der erhaltene Prüfling weist folgende Maße auf:

Außendurchmesser 34 mm
Innendurchmesser 21,5 mm
Höhe 6,1 mm

Es werden 10 Grünlinge der vorgenannten Art hergestellt.

**Beispiel 2**

Der erste dieser Grünlinge wird bei 1 620°C einem Sintervorgang unterworfen, bei dem er innerhalb von 22 Stunden auf 1 620°C aufgeheizt, auf dieser Temperatur 4,4 Stunden gehalten und dann 21 Stunden auf 75°C abgekühlt wird. Das fertig gesinterte Bauteil weist folgende Maße auf:

Außendurchmesser 28,3 mm
Innendurchmesser 17,9 mm
Höhe 5,1 mm

Auf einem Schleifautomaten werden beide Stirnflächen planparallel geschliffen. Es ergibt sich eine Höhe von 4,85 mm. Die Rückseite weist eine Rauhigkeit $R_a$ von 0,8 bis 1,0 µm auf, die Dichtfläche eine Rauhigkeit $r_a$ von 0,8 bis 1,0 µm. Die Dichtfläche wird im Anschluß an die Schleifbehandlung poliert und weist dann eine Rauhigkeit $R_a$ von 0,25 µm, eine Ebenheit von 0,6 µm auf. Die Porosität beträgt weniger als 3,5 %.

**Beispiel 3**

Ein Grünling aus der Serie gemäß Beispiel 1 wird mit 0,4 ml $H_2O/m^2$ angefeuchtet und mit 20 g/qm entsprechend 10 mg Kobaltoxid rückseitig bestreut. Nach dem Brennvorgang weist dieser Ring eine intensive blaue Farbe auf. Ein Schnitt durch den Ring zeigt, daß die Eindringtiefe der Farbe 1,0 mm beträgt. Nach Abschleifen der Dichtfläche und der Rückseite beträgt die Höhe des Ringes 4,85 mm, die Färbung der Rückseite ist durch das Abschleifen heller geworden, sie ist jedoch noch deutlich wahrnehmbar.

**Beispiel 4**

Ein weiterer Grünling aus der Serie gemäß Beispiel 1 wird mit 0,5 ml $H_2O/m^2$ angefeuchtet und mit 30 g/qm entsprechend 1,5 mg Nickeloxid rückseitig bestreut. Nach dem Brennvorgang weist dieser Ring eine hellgrüne Farbe auf. Ein Schnitt durch den Ring zeigt, daß die Eindringtiefe der Farbe 0,8 mm beträgt. Nach Abschleifen der Dichtfläche und der Rückseite beträgt die Höhe des Ringes 4,85 mm, die Färbung der Rückseite ist durch das Abschleifen heller geworden, sie ist jedoch noch deutlich wahrnehmbar.

**Beispiel 5**

Ein weiterer Grünling aus der Serie gemäß Beispiel 1 wird mit 0,5 ml $H_2O/m^2$ angefeuchtet und mit 40 g/qm entsprechend 20 mg Kupferoxid rückseitig bestreut. Nach dem Brennvorgang weist dieser Ring eine braune Farbe auf. Ein Schnitt durch den Ring zeigt, daß die Eindringtiefe der Farbe 0,4 mm beträgt. Nach Abschleifen der Dichtfläche und der Rückseite beträgt die Höhe des Ringes 4,85 mm, die Färbung der Rückseite ist durch das Abschleifen heller geworden, sie ist jedoch noch deutlich wahrnehmbar.

**Beispiel 6**

Ein gemäß Beispiel 1 produzierter Rohling wird mit einer Salzlösung von Kobaltchlorid besprüht, so daß die Oberfläche der Rückseite des Grünlings mit 200 ml/qm entsprechend 0,1 ml pro Ring beschichtet ist. Die Kobaltchloridlösung wurde durch Lösen von 76,7 g $CoCl_2$ x 6 $H_2O$ in 100 g $H_2O$ erstellt. Nach Eindiffundieren der Salzlösung erfolgt der Brennvorgang, im Anschluß daran die Schleif-, Läpp- und Polierarbeit, wobei die Rückseite lediglich geschliffen, aber nicht poliert und geläppt wird. Als Außendurchmesser ergibt sich nach dem Sintervorgang 28,3 mm, der Innendurchmesser beträgt 17,9 mm, die Höhe nach dem Sintervorgang 5,1 mm, nach dem Schleif- und Poliervorgang 4,85 mm. Ein Schnitt durch den Ring ergibt, daß die Eindringtiefe des Farbstoffes 0,5 mm ausmacht. Die Einfärbung wies eine blaue Farbe auf.

**Beispiel 7**

Ein gemäß Beispiel 1 produzierter Rohling wird mit einer Salzlösung von Chromsulfat besprüht, so daß die Oberfläche der Rückseite des Grünlings mit 300 ml/qm entsprechend 0,15 ml pro Ring beschichtet ist. Die Chromsulfatlösung wurde durch Lösen von 120 g Cr $(SO_4)_3$ x 18 $H_2O$ in 100 g $H_2O$ erstellt. Nach Eindiffundieren der Salzlösung erfolgt der Brennvorgang, im Anschluß daran die Schleif-, Läpp- und Polierarbeit, wobei die Rückseite lediglich geschliffen, aber nicht poliert und geläppt wird. Als Außendurchmesser ergibt sich nach dem Sintervorgang 28,3 mm, der Innendurchmesser beträgt 17,9 mm, die Höhe nach dem Sintervorgang 5,1 mm, nach dem Schleif- und Poliervorgang 4,85 mm. Ein Schnitt durch den Ring ergibt, daß die Eindringtiefe des Farbstoffes 1,2 mm ausmacht. Es ergab sich eine rote Einfärbung.

## Beispiel 8

Ein gemäß Beispiel 1 produzierter Rohling wird mit einer Salzlösung von Nickelnitrat besprüht, so daß die Oberfläche der Rückseite des Grünlings mit 300 ml/qm entsprechend 0,15 ml pro Ring beschichtet ist. Die Nickelnitratlösung wurde durch Lösen von 238,5 g Ni $(NO_3)_2$ x 6 $H_2O$ in 100 g $H_2O$ erstellt. Nach Eindiffundieren der Salzlösung erfolgt der Brennvorgang, im Anschluß daran die Schleif-, Läpp- und Polierarbeit, wobei die Rückseite lediglich geschliffen, aber nicht poliert und geläppt wird. Als Außendurchmesser ergibt sich nach dem Sintervorgang 28,3 mm, der Innendurchmesser beträgt 17,9 mm, die Höhe nach dem Sintervorgang 5,1 mm, nach dem Schleif-und Poliervorgang 4,85 mm. Ein Schnitt durch den Ring ergibt, daß die Eindringtiefe des Farbstoffes 1,3 mm ausmacht. Es ergab sich eine grüne Einfärbung.

## Beispiel 9

Ein gemäß Beispiel 1 produzierter Rohling wird mit einer Salzlösung von Kupferchlorid besprüht, so daß die Oberfläche der Rückseite des Grünlings mit 600 ml/qm entsprechend 0,3 ml pro Ring beschichtet ist. Die Kupferchloridlösung wurde durch Lösen von 70,6 g $CuCl_2$ in 100 g $H_2O$ erstellt. Nach Eindiffundieren der Salzlösung erfolgt der Brennvorgang, im Anschluß daran die Schleif-, Läpp- und Polierarbeit, wobei die Rückseite lediglich geschliffen, aber nicht poliert und geläppt wird. Als Außendurchmesser ergibt sich nach dem Sintervorgang 28,3 mm, der Innendurchmesser beträgt 17,9 mm, die Höhe nach dem Sintervorgang 5,1 mm, nach dem Schleif-und Poliervorgang 4,85 mm. Ein Schnitt durch den Ring ergibt, daß die Eindringtiefe des Farbstoffes 1,9 mm ausmacht.

## Patentansprüche

1. Verfahren zum dauerhaften, farbigen Kennzeichnen von Rückseiten von Bauteilen aus Sinterkeramik, insbesondere Bauteilen aus gesinterter Oxidkeramik, die nach dem Sintervorgang einer weiteren Bearbeitung durch Schleifen, Läppen und ggf. Polieren der Vorderseite und Schleifen der Rückseite unterzogen werden, wobei diese Bauteile aus keramischen Pulvern zu weitgehend dichten Grünlingen gepreßt oder unter Zusatz von Plastifizierungsmitteln extrudiert und die Grünlinge ggf. vor dem Sinterprozeß nachgearbeitet werden, dadurch gekennzeichnet, daß die Grünlinge vor dem Sinterprozeß an der Rückseite mit ein oder mehreren beim Sinterprozeß sich mit den keramischen Pulvern verbindenden färbenden Substanzen versehen werden.

2. Verfahren nach Anspruch 1, dadurch gekennzeichnet, daß die Grünlinge angefeuchtet und mit färbenden Substanzen bestäubt werden.

3. Verfahren nach einem der Ansprüche 1 und 2, dadurch gekennzeichnet, daß zum Bestäuben der Grünlinge Oxide der Metalle der IV bis VIII Nebengruppe des periodischen Systems der Elemente verwandt werden.

4. Verfahren nach einem der Ansprüche 1 bis 3, dadurch gekennzeichnet, daß auf die Rückseite der Grünlinge 20 bis 500 g/qm Rückseitenoberfläche färbende Substanzen aufgestäubt werden.

5. Verfahren nach Anspruch 1, dadurch gekennzeichnet, daß auf die Grünlinge eine färbende Substanzen enthaltende Lösung aufgebracht wird.

6. Verfahren nach einem der Ansprüche 1 und 5, dadurch gekennzeichnet, daß das Aufbringen der Farbstoff enthaltenden Lösung durch Sprühen erfolgt.

7. Verfahren nach einem der Ansprüche 1, 5 und 6, dadurch gekennzeichnet, daß als färbende Substanzen enthaltende Lösung Salzlösungen von Salzen der Metalle der IV bis VIII Nebengruppe des periodischen Systems der Elemente verwandt werden.

8. Verfahren nach Anspruch 1 und 5 bis 7, dadurch gekennzeichnet, daß 20 bis 500 ml Lösung pro qm auf die Oberfläche der Rückseite eines Grünlings eine 5 bis 80 prozentige Salzlösung aufgesprüht werden.

## Claims

1. Process for the permanent coloured marking of the rear sides of components of sintered ceramics, especially components of sintered oxide ceramics, which after the sintering operation are subjected to further machining by grinding, lapping and optionally polishing of the front side and grinding of the rear side, these components being compressed from ceramic powders to form substantially compact green compacts or being extruded with the addition of plasticisers, and the green compacts optionally being after-treated before the sintering operation, characterised in that before the sintering operation the green compacts are provided on the rear side with one or more colouring substances that bind with the ceramic powders during the sintering operation.

2. Process according to claim 1, characterised in that the green compacts are moistened and dusted with colouring substances.

3. Process according to claim 1 or 2, characterised in that oxides of metals of sub-groups IV to VIII of the Periodic Table of Elements are used for dusting the green compacts.

4. Process according to any one of claims 1 to 3, characterised in that the green compacts are dusted on the rear side with from 20 to 500 g of colouring substances per square metre of surface.

5. Process according to claim 1, characterised in that a solution containing colouring substances is applied to the green compacts.

6. Process according to claim 1 or 5, characterised in that the application of the solution containing the colouring material is effected by spraying.

7. Process according to any one of claims 1, 5 and 6, characterised in that solutions of salts of metals of sub-groups IV to VIII of the Periodic Table of Elements are used as the solutions containing colouring substances.

8. Process according to claim 1 and 5 to 7, characterised in that a 5 to 80 % salt solution is sprayed onto the surface of the rear side of a green compact at a concentration of from 20 to 500 ml of solution per square metre.

**Revendications**

1. Procédé pour marquer durablement en couleur les côtés arrière de composants en céramique frittée, notamment de composants en céramique d'oxydes frittée, lesquels composants sont soumis, après le frittage, à un usinage supplémentaire par meulage, rodage et éventuellement polissage du côté avant et meulage du côté arrière, ces composants étant comprimés à partir de poudres céramiques pour former des pièces comprimées crues essentiellement denses, ou étant extrudés sous addition d'agents plastifiants, et les pièces comprimées crues étant éventuellement retouchées avant le frittage, caractérisé par le fait qu'avant le frittage les pièces comprimées crues sont munies, sur leur côté arrière, d'une ou plusieurs substances colorantes se liant aux poudres céramiques lors du frittage.

2. Procédé selon revendication 1, caractérisé par le fait que les pièces comprimées crues sont humidifiées et saupoudrées avec des substances colorantes.

3. Procédé selon l'une des revendications 1 et 2, caractérisé par le fait que l'on utilise, pour le saupoudrage des pièces comprimées crues, des oxydes de métaux des sous-groupes IV à VIII du système périodique des éléments.

4. Procédé selon l'une des revendications 1 à 3, caractérisé par le fait que l'on saupoudre le côté arrière des pièces comprimées crues avec des substances colorantes à raison de 20 à 500 g par de surface de côté arrière.

5. Procédé selon revendication 1, caractérisé par le fait que l'on applique sur les pièces comprimées crues une solution contenant des substances colorantes.

6. Procédé selon l'une des revendications 1 et 5, caractérisé par le fait que l'apport de la solution contenant le colorant s'effectue par pulvérisation.

7. Procédé selon l'une des revendications 1, 5 et 6, caractérisé par le fait que l'on utilise, comme solution contenant des substances colorantes, des solutions salines de sels de métaux des sous-groupes IV à VIII du système périodique des éléments.

8. Procédé selon revendications 1 et 5 à 7, caractérisé par le fait que l'on pulvérise, sur la surface du côté arrière d'une pièce comprimée crue, une solution saline à 5 à 80 %, à raison de 20 à 500 ml de solution par m$^2$.